# EUROPEAN PATENT APPLICATION

(11) **EP 3 094 125 A1**
(43) Date of publication of application: **16.11.2016**
(21) Application number: 15275135.0
(22) Date of filing: 13.05.2015
(51) Int. Cl.: H04W 16/14

(54) **A COMMUNICATIONS SYSTEM**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Disclosed is an apparatus operable to transmit and receive a signal in a TV White Space, TVWS, signals compatible with STANAG 4691. Also disclosed is a network comprising a plurality of such apparatus and a method of operation.

## Description

The present invention is related to a communication system which utilises Radio Frequency (RF) spectrum vacated by terrestrial television broadcast services. Such spectrum, which is newly available, is known as TV White Space (TVWS). TVWS spectrum is becoming available in most countries around the world as TV broadcast systems switch from analogue to digital broadcasting, thereby freeing up at least part of the spectrum which was previously assigned to analogue broadcast services.

This may be due to digital broadcasting service moving to other frequency bands, or remaining in the same or similar bands, but occupying less bandwidth due to the greater efficiency of digital broadcasting.

The RF spectrum in question resides approximately between 470MHz and 790MHz, and portions of this spectrum are becoming available for non-TV use. In European countries the channel spacing is typically 8MHz, and in the United States the channel spacing is 6MHz.

It is an aim of embodiments of the present invention to utilise the newly available TVWS spectrum to facilitate communications, particularly, but not exclusively, in a maritime setting. Other environments may, of course, benefit from embodiments of the invention and it is not intended to be limited only to maritime applications.

According to the present invention, there is provided an apparatus operable to transmit and receive, in TV White Space, TVWS, signals compatible with STANAG 4691.

Preferably, the apparatus is a transceiver. Alternatively, it may comprise separate transmitter and receiver modules.

Preferably, the apparatus is operable to connect to the internet to access a remote TVWS Database, operable to serve the apparatus with transmission parameters. Access to the internet may be by direct connection or via a suitable enabled LAN / WAN, either wired or wireless.

Preferably, the apparatus is further operable to establish a secondary, over the air, connection to the internet. This mitigates the risk associated with a seemingly permanent connection failing. In this way, connectivity and operation can be maintained.

Preferably, the apparatus comprises a TVWS Manager operable to format messages for transmission according to STANAG 4691 protocols.

Preferably, the apparatus further comprises a Cognitive Frequency Hop Controller operable to control transmit and/or receive parameters in accordance with predefined frequency hop settings and to operate within any parameters received from a TVWS Database. This advantageously provides resilience and some immunity from interfering signals.

Preferably, one of the plurality of apparatus is designated as a Master device and the remaining one or ones of the plurality of apparatus is/are designated as a Slave device or devices.

Preferably, in a network comprising at least three apparatus and where there is no direct communication possible between the first and third apparatus, all communication between the first and third apparatus is routed via the second apparatus. This allows a network to be constructed where there is no fixed topology and nodes may move relative to one another.

Preferably, the Master device is operable to transmit to a TVWS Database its geographic position and to receive from the TVWS Database a set of Generic Operating Parameters including operating parameters including available channels and associated transmission powers, the Master device then using the Generic Operating Parameters to control any subsequent transmissions.

Preferably, a Slave device, having established communication with the Master device, is allocated a set of Slave Specific Operating Parameters from the TVWS database, via the Master device.

According to another aspect of the present invention, there is provided a method of transmitting data comprising the steps of formatting messages according to STANAG 4691 and transmitting the formatted messages according to a TVWS scheme.

According to the present invention there is provided an apparatus and method as set forth in the appended claims. Other features of the invention will be apparent from the dependent claims, and the description which follows.

For a better understanding of the invention, and to show how embodiments of the same may be carried into effect, reference will now be made, by way of example, to the accompanying diagrammatic drawings in which:
Figure 1 shows a schematic representation of an embodiment of the present invention;
Figure 2 shows an example implementation using the embodiment of Figure 1;
Figure 3 shows a further example implementation using the embodiment of Figure 1;
Figure 4 shows a still further example implementation using the embodiment of Figure 1; and
Figure 5 shows how a number of transceivers, according to an embodiment of the invention, may be used together to form a complete communications system, and describes the data flows within that communications system.

Embodiments of the present invention enable the use of civil and military applications in which a maritime, high bandwidth, secure, robust, self-forming/managing and internationally compatible network is required. Particular applications which may benefit from embodiments of the invention may include, but are not limited to, oil and gas installations, such as rigs, renewable energy installations, such as wind turbines, environmental monitoring stations, maritime defence facilities and ships, maritime homeland security facilities, maritime search and rescue facilities and maritime autonomous systems.

The TVWS spectrum which is becoming available is allowing non-TV applications to be pursued in the spectrum which is now no longer dedicated to TV services. To further increase the availability of spectrum within the TVWS spectrum, a technique known as "Cognitive Radio" may be used to manage the available spectrum in a more efficient manner. Devices which wish to utilise the TVWS spectrum, known as TVWSDs, are required to consult an online TVWS Database (TVWSDB), which acts to allocate frequency channels and power levels to each TVWSD, based on knowledge of where each TVWSD is located, and what other spectrum users are located in or near each TVWSD.

Embodiments of the present invention make use of an enhanced version of the Cognitive Radio concept, which will be described in more detail later.

UHF frequencies, such as those in the TVWS spectrum, are particularly well-suited to maritime communications due to their favourable propagation characteristics and the relatively low transmit powers needed. These particular frequencies experience low absorption in the atmosphere and also permit the use of simple, widely-available and relatively inexpensive antenna arrangements.

There exists a communication protocol known as STANAG 4691. STANAG refers to a NATO Standardisation Agreement, and defines a communication protocol. STANAG 4691 refers specifically to a protocol to enable a data network to be established over legacy HF, VHF and UHF bearers. The legacy bearers are typically voice-based analogue radio channels. The protocol, at the present time, typically supports a maximum channel bandwidth of 500kHz.

It is not necessary to provide a detailed description of the features of STANAG 4691 since the skilled person, operating in this field, will be well aware of such features and the features, in themselves, do not form part of the inventive concept. Rather, it is the interoperation of such features in a TVWS environment which allows embodiments of the present invention to function.

At a basic level, STANAG 4691 and TVWS appear incompatible, since STANAG 4691 is specified to be used with legacy systems, i.e. those which are in existence already and which are not planned to be developed. Furthermore, since the present maximum channel bandwidth in STANAG 4691 is 500kHz, whereas for TVWS it is either 6MHz or 8MHz, depending on location (the USA or Europe, respectively), there is a further fundamental reason to discount any system which might seek to integrate certain features of both systems since most of the spectrum will be wasted. Hence it is a feature of embodiments of this invention, to extend the present 500kHz channel bandwidth of STANAG 4691 by a factor of sixteen to optimise it for operation in TVWS, whilst retaining identical waveform structural and coding schemas to assure international interoperability.

Thus, it is found that a system which is built around, and merges and extends, features of both systems i.e. STANAG 4691 and TVWS, offers significant advantages, which will be set out in the following description.

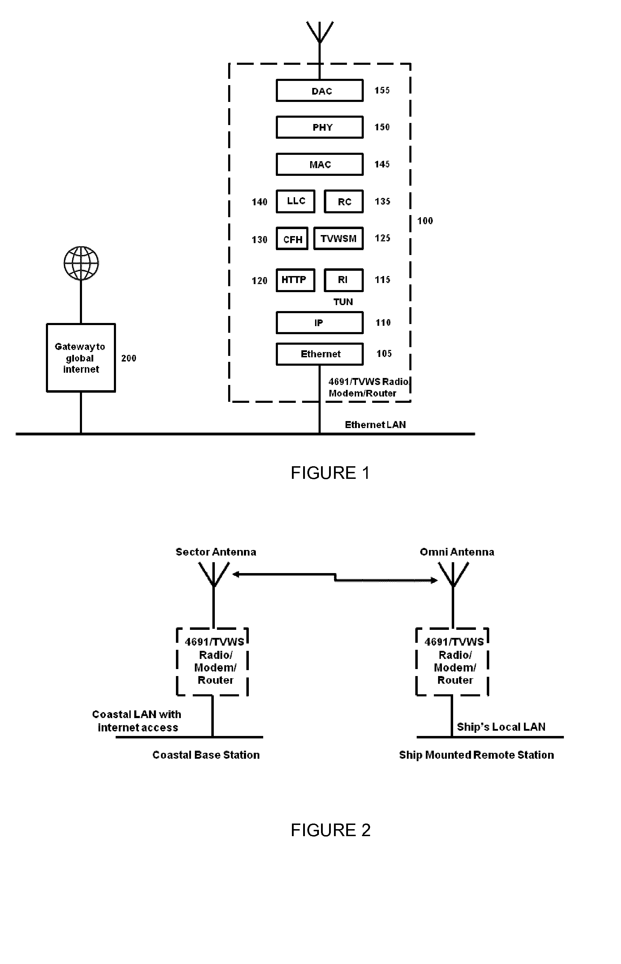

Figure 1 shows a functional block diagram of an embodiment of the present invention. In particular, there is shown a transceiver 100, which includes the functions of a radio for transmitting and receiving air interface signals, a modem and a router for passing digital signals to and from the radio portion. The transceiver 100 is functionally connected to a network via an Ethernet/LAN connection, which provides it with functional access to the Internet or such other network as may be specified. This may be a closed intranet, rather than the Internet per se, although access must eventually be provided by some means to the TVWSDB, since this must be consulted in order to discern operating parameters.

The transceiver includes several separate functional blocks, each arranged to perform a defined function.

Ethernet portion 105 is arranged to provide Media Access to a wired Ethernet-compliant network.

Internet Protocol (IP) portion 110 is arranged to deliver IP-compliant traffic between hosts.

Router Interface (RI) portion 115 is arranged to communicate with the attached IP router and to route IP PDUs to and from the STANAG 4691-compliant protocol stack.

Hyper Text Transfer Protocol (HTTP) portion 120 is arranged to provide reliable transmission of hypertext data or documents.

The preceding functional blocks are well known in the art and function in ways known to the skilled person and so will not be described in any greater detail here.

TVWSM portion 125 is the TVWS Manager (TVWSM) and it is arranged to implement the TVWS protocols as defined in one or more standards e.g. in Europe the ETSI EN 301598: *White Space Devices (WSD); Wireless Access Systems operating in the 470 to 790MHz TV broadcast band; Harmonized EN covering the essential requirements of article* 3.2 of *the R&TTE Directive.* Compliance with other national and international TVWS standards may be achieved by changing the firmware within the Transceiver 100.

The TVWSM 125 is responsible for periodically accessing the relevant national TVWSDB and obtaining transmission parameters - primarily frequency and power - which may be used for a specified geographical locality. Access to the TVWSDB is usually provided via the HTTP using a fixed internet connection (e.g. Gateway to Global Internet, 200), which will provide access to the TVWSDB. If such access is not possible for any reason, then a secondary access route may be provided 'over the air', using its own wireless network via RI 115 and higher levels of the protocol stack, in which case access to a secondary TVWSDB may be provided via a neighbour node. In this way, if the transceiver is somehow disconnected from the Internet and is therefore unable to access the TVWSDB as required, then the transceiver is able to obtain the required information via another similar transceiver which is appropriately connected to the Internet.

The TVWSM 125 is also responsible for acting as a Slave node when it will receive its transmission parameters from a Master node. Further it can act as a Secondary Master node, serving TVWSDB information across the network to nodes that are unable to directly access the master TVWSDB themselves. These modes will be described in more detail later.

A further responsibility of the TVWSM 125 is to configure the PHY 150 and MAC 145 layers of the STANAG 4691 implementation, using information received from the TVWSDB, to set up the appropriate transmission parameters e.g. power and frequency.

The TVWSM 125 is responsible for implementing the STANAG 4691 protocols and so formats the messages that are passed over the air interface via antenna 160. Such messages pass up the stack via Link Layer Control (LLC) 140, Relay Control (RC) 135, Media Access Control (MAC) 145 to the Physical Layer (PHY) 150 where the STANAG 4691-compliant waveforms are assembled in digital format and are transmitted. These waveforms include the data packets and link management and control data. The final layer of the stack is the Digital to Analogue Converter (DAC) 155 which converts the digital signal to analogue waveforms which are amplified and transmitted via the antenna 160. The receive function of the transceiver 100 operates in the reverse manner, as is usual in the art.

The entire scheme works in a Time Division Multiplexed Access (TDMA) mode. The RC 135 layer of the protocol stack monitors the Line of Sight (LOS) network topology to determine network membership and shortest paths to desired destinations. This helper protocol provides Layer 2 routing when required, and is responsible for finding a route between nodes when they are on different TVWS channels. The RC functional block 135 has access to a database of node positions within the network, allocated frequency channels and transmit powers, as well as other parameters which may be relevant. From this information, it is able to plan the best route through the network nodes.

The Link Layer Control (LLC) 140 is responsible for packet segmentation, reassembly, and duplicate detection. The LLC may also perform data compression and decompression.

The Media Access Control (MAC) 145 coordinates transmissions on the shared channel using a synchronous Time-Division Media Access (TDMA) scheme, allocating time slots in proportion to reported requirements. In addition, the MAC increases the reliability of data transfer by implementing automatic repeat request (ARQ).

According to embodiments of the invention, the MAC 145 layer is prevented from transitioning out of a listening state until its TVWS channel and transmit power have been allocated, either by being told directly by its TVWSM with access to a master database, or by additional information encoded into a MAC PDU received from a neighbour node. Until this information is received the Listening node will continue to scan the available channels.

A further functional module within the transceiver is the Cognitive Frequency Hop (CFH) controller 130. This manages Cognitive Frequency Hopping and sets hop parameters such as hop rate, hop sequence (e.g. linear, pseudo-random, pre-set key etc.) in accordance with user settings and/or sensing of the electromagnetic environment in which the system is operating. It ensures that the CFH function operates at all times within the parameters received from the TVWSDB, unless overridden by an Administrator with the appropriate rights. By use of CFH, the network is more robust, secure and made more immune to interfering signals on adjacent channels, for instance. This has a measurable impact on link reliability and helps to provide a better network availability.

Access to the system may be facilitated via a web browser interface with the relevant username and password, or other login credentials, such as biometric information or access card. By means of this interface, many of the internal parameters can be adjusted and set, including those needed in order to achieve compliance with different nations' TVWS Standards. The default set of parameters are those required for compliance with ETSI EN 301598, but this is exemplary only and can readily be adjusted by means of variant firmware and software.

Embodiments of the invention require only three interfaces in order to operate. Firstly, an appropriate mains (AC) or DC power supply is required. Secondly, an Ethernet interface with access to the global internet in order to allow access to the relevant nation's TVWSDB is required for Master nodes only. Thirdly, an external antenna is required, which can be chosen depending on the application; some examples of antenna types are indicated in Figures 2 to 4.

Figure 2 shows an example coastal network with a coastal base station in communication with a ship-mounted remote station. The coastal base station is supplied with power and connected to a LAN with access to the Internet, for accessing the TVWSDB. The coastal base station is further provided with a sector antenna, which is directed out to sea to communicate e.g. with suitably equipped maritime vessels. A sector antenna is preferred since it can be arranged to transmit and receive over a particular azimuthal range, reducing land-based interference.

The coastal base station is arranged to be in communication with a vessel out at sea. The transceiver on board the vessel is connected to the vessel's LAN. It is further provided with power from the vessel, and is equipped with an omnidirectional antenna. This is preferred on a mobile vehicle, since it may not be possible to tell at any given time the relative bearings of other communicating nodes.

In the simple point to point configuration shown in Figure 2, there are no complex network set up considerations and the communication between the two nodes can proceed as set out previously.

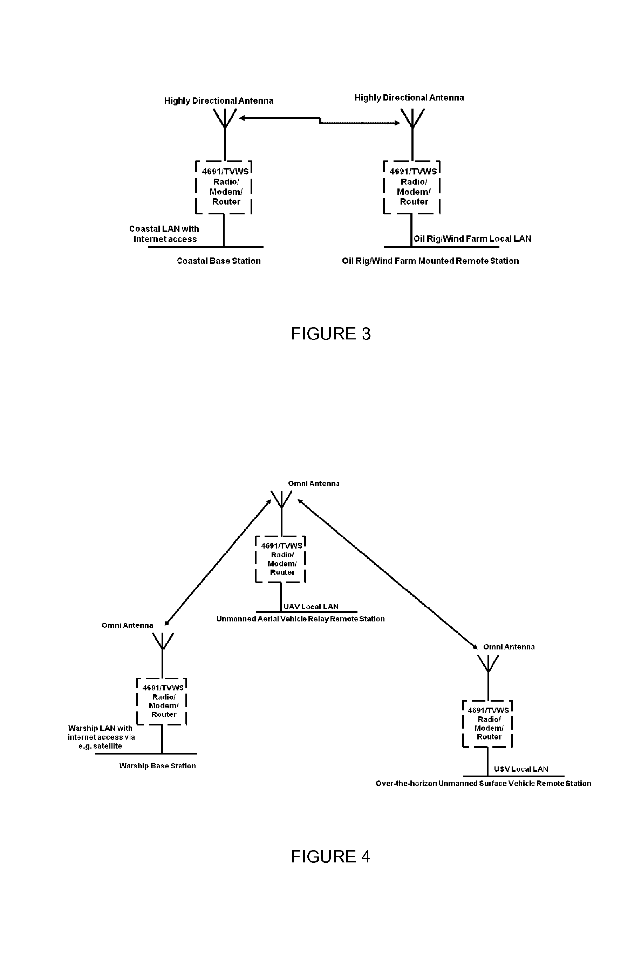

Figure 3 shows a different network set up where a coastal base station is in communication with a remote, but fixed-location node, such as an oil rig or wind farm. The coastal base station is essentially in the same configuration as that described with respect to Figure 2, but the antenna is, instead, a highly directional antenna, such as a Yagi antenna, which is directed towards a similar antenna provided on the remote node. In all other respects, the setup in the example network shown in Figure 3 is the same as that shown in Figure 2.

Figure 4 shows a further example of a network, with a more complex configuration. In this example, there are three nodes: a maritime vessel, an unmanned aerial vehicle relay remote station, and an over-the-horizon unmanned surface vehicle remote station. The first and last nodes listed above are not within range of each other and any communications must therefore be routed through the unmanned aerial vehicle, which is within range of both of the other nodes.

Each of the nodes is equipped with an omnidirectional antenna since the location of other possible nodes cannot be known in advance. One of the nodes is designated as a Master node (in this case, the first listed node) and it has access to the Internet in order to access the TVWSDB.

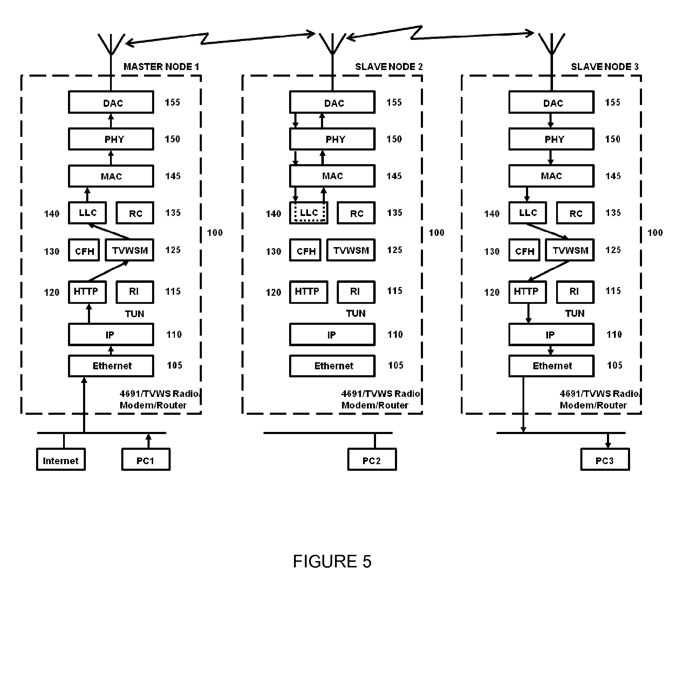

In order for the first (Master) node to transmit a message to the last (Slave) node, the message must be routed via the middle node. Operation of this embodiment of the invention is best illustrated by means of an example involving the relay configuration shown in Figure 4, and by reference to the information flow shown in Figure 5.

TVWSM 125 of the Master node 1 is aware that it has global internet connectivity and, therefore, that it is authorised to act as a Master node. TVWSM 125 communicates its geographic position (as latitude, longitude and an uncertainty measured in metres in x:y:z to a 95% confidence interval) to the TVWSDB, via the Internet, and receives, in return, a set of Generic Operating Parameters (GOPs) typically comprising a list of available TVWS Channels, the maximum allowable power within those Channels, and an estimated Coverage Area. Note that the GOPs may be over-restrictive in that they assume that any Slave nodes attached to the Master node could be anywhere within its Coverage Area. TVWSM 125 transmits these GOPs as a broadcast message in order to establish whether any Slave nodes are within range.

Slave nodes 2 and 3 are initially in a passive listening state. Initially, Slave node 2 is within actual radio range of Master node 1, and Slave node 3 is outside the radio range of Master node 1. Only Slave node 2 will therefore receive the GOPs, and will respond back to the Master node 1 with an acknowledgement. If Slave node 2 is aware of its geographic location (which may not necessarily always be the case) then it includes its location information within its acknowledgement. TVWSM 125 of Master node 1 then relays the Slave node 2 information back to the TVWSDB, via the Internet, and receives, in reply, a set of Slave Specific Operational Parameters (SSOPs) which are likely to be less restrictive than the GOPs, especially if Slave node 2 is away from land, which will especially be the case in maritime settings and applications. At all times TVWSM 125 of Master node 1 will keep the TVWSDB informed as to the actual Slave Channel Usage Parameters (SCUPs) in use.

Slave node 3 is initially in a passive listening state. Although it is out of range of transmissions from Master node 1, it is able to receive the transmissions from Slave node 2. Slave node 3 therefore sends an acknowledgement (again including its geographic position if it knows it) back to Slave node 2, where it is recognised as having come from a 'new slave'. TVWSM 125 of Slave node 2 keeps a record of the existence of Slave node 3 and relays the acknowledgement onwards to Master node 1. At this time the TVWSM 125 of Master node 1 therefore knows that another slave is available and wishes to join the multi-hop network and informs the TVWSDB via the global internet. If TVWSM 125 of Master node 1 does not know the precise geographic location of Slave node 2 then it will estimate it, for example from knowledge of the likely maximum theoretical radio ranges, received signal strength or other such parameters known in the art of passive location estimation.

The TVWSM of Master node 1 then responds with another set of GOPs for Slave node 3 (or with SSOPs if its geographic location is accurately known, rather than estimated) which are relayed via Slave node 2 to Slave node 3. The entire network is at this time set up and ready to transmit user packet data.

From the foregoing it will be apparent that embodiments of this invention are inherently scalable to many more nodes than just the two or three illustrated herein, and that the resulting network system is able to self-adapt to any number of dynamically-changing nodes, subject to overall bandwidth limitations, as is normal in the art.

If the system is being used in a Cognitive Frequency Hop (CFH) mode then the CFH module 130 is invoked in order to implement the hops, always remaining within the TVWS Channels and transmit power levels received from the TVWSDB. The hop settings, and possibly the instantaneous hop parameters, are transmitted to the TVWSDB via the global internet. Note that the apparatus cannot enter CFH mode until it has received a set of either GOPs or SSOPs from the TVWSDB.

It is illustrative to use the same example configuration set out above and in Figure 5 to describe how user packet data can be transmitted from an application layer source at PC1 (connected to Master node 1) to another application layer sink at PC3 (connected to Slave node 3) once the network has been established and has stabilised. The arrows in Figure 5 describe the data flow diagrammatically, and the following paragraphs describe it in more detail. It is particularly illustrative to consider such an end-to-end message flow as it fully illustrates the way in which the STANAG 4691 protocols have been closely integrated with the TVWS/ETSI/EN protocols.

PC1 transmits an IP packet which is received at the HTTP module 120 within Master node 1. From the Ethernet header information, the RI 115 at Master node 1 knows that the IP packet is destined for Slave node 3 and therefore sends the packet via TVWSM 125 to LLC 140 where it is processed in preparation for transmission over the air. LLC 140, assisted by its local Relay Control (RC) 135, knows that packets to be sent to Slave node 3 must be relayed via Slave node 2, and a MAC Protocol Data Unit (PDU) with the next-hop destination of Slave node 2 is therefore prepared for transmission with the LLC 140 PDU as payload. This PDU is passed up the stack through the MAC 145, PHY 150 and DAC 155 layers where the STANAG 4691-compliant waveform is synthesised and ultimately transmitted over the air.

If received successfully at Slave node 2, the de-encapsulated MAC PDU is passed from PHY 150 to the MAC 145 which then passes the PDU payload to LLC140. LLC 140 recognises from the reported header information that the destination is Slave node 3 and, assisted by its local Relay Control (RC) 135, knows that Slave node 3 is a direct neighbour. The LLC 140 PDU is therefore sent back to the MAC 145 for relay transmission; note that the PDU does not proceed any lower down the protocol stack than LLC 140. A MAC PDU with a next-hop destination of Slave node 3 is then prepared for transmission with the LLC PDU as payload. From the MAC, the PDU is re-transmitted over the air via the physical layers of the stack.

If received correctly at PHY3 of Slave node 3, the MAC PDU is passed to MAC 145 and the LLC PDU is passed to the LLC 140 sublayer. LLC 140 performs any necessary re-assembly, decompression, decryption etc. and eventually the original IP packet is passed from HTTP 120 under the control of RI 115 out over the Ethernet LAN, and onwards to its ultimate destination at the application layer within PC3.

From the foregoing it will be apparent how the characteristics of STANAG 4691 and TVWS protocols and standards have been combined to yield a system operable to implement a multi-hop, beyond-line-of-sight, self-forming, self-managing, IP wireless data network that is amenable to international standardisation and hence interoperability. The resulting network enables users to take advantage of the bandwidth being made available as a result of the switchover from analogue to digital TV, whilst remaining entirely compliant with emerging TVWS standards and ensuring interoperability between all nations that adopt NATO STANAG 4691. Whilst being particularly suitable for naval and maritime applications, embodiments of the invention can be deployed to equal effect in land-based and airborne systems.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. Apparatus operable to transmit and receive, in a TV White Space, TVWS, signals compatible with STANAG 4691.

2. Apparatus as claimed in claim 1 wherein the apparatus is a transceiver.

3. Apparatus as claimed in any preceding claim wherein the apparatus is operable to connect to the internet to access a remote TVWS Database, operable to serve the apparatus with transmission parameters.

4. Apparatus as claimed in claim 3 wherein the apparatus is further operable to establish a secondary, over the air, connection to the internet.

5. Apparatus as claimed in any preceding claim wherein the apparatus comprises a TVWS Manager (125) operable to format messages for transmission according to STANAG 4691 protocols.

6. Apparatus as claimed in any preceding claim further comprising a Cognitive Frequency Hop Controller (130) operable to control transmit and/or receive parameters in accordance with predefined frequency hop settings and to operate within any parameters received from a TVWS Database.

7. A network comprising a plurality of apparatus as claimed in any preceding claim, wherein one of the plurality of apparatus is designated as a Master device and the remaining one or ones of the plurality of apparatus is/are designated as a Slave device or devices.

8. A network as claimed in claim 7 comprising at least three apparatus and where there is no direct communication possible between the first and third apparatus, all communication between the first and third apparatus is routed via the second apparatus.

9. A network as claimed in any of claim 7 or 8 wherein the Master device is operable to transmit to a TVWS Database its geographic position and to receive from the TVWS Database a set of Generic Operating Parameters including operating parameters including available channels and associated transmission powers, the Master device then using the Generic Operating Parameters to control any subsequent transmissions.

10. A network as claimed in claim 9 wherein a slave device, having established communication with the Master device, is allocated a set of Slave Specific Operating Parameters from the TVWS database, via the Master device.

11. A method of transmitting data comprising the steps of formatting messages according to STANAG 4691 and transmitting the formatted messages according to a TVWS scheme.

12. An apparatus substantially as hereinbefore described, having particular reference to the accompanying drawings.

13. A method, substantially as hereinbefore described, having particular reference to the accompanying drawings.
